(19) Europäisches Patentamt
European Patent Office
Office européen des brevets

(11) EP 3 480 881 B1

(12) **EUROPEAN PATENT SPECIFICATION**

(45) Date of publication and mention of the grant of the patent:
**01.09.2021 Bulletin 2021/35**

(21) Application number: **17743372.9**

(22) Date of filing: **29.06.2017**

(51) Int Cl.:
***H01M 10/052*** $^{(2010.01)}$ ***H01M 10/0567*** $^{(2010.01)}$
***H01M 10/0568*** $^{(2010.01)}$ ***H01M 10/0569*** $^{(2010.01)}$

(86) International application number:
**PCT/ES2017/070476**

(87) International publication number:
**WO 2018/007665 (11.01.2018 Gazette 2018/02)**

(54) **ELECTROLYTE BASED ON SULFUR/POLYSULFUR FOR LITHIUM/SULFUR BATTERIES**

ELEKTROLYT AUF BASIS VON SCHWEFEL/POLYSCHWEFEL FÜR LITHIUM/SCHWEFEL-BATTERIEN

ÉLECTROLYTE À BASE DE LIQUIDE IONIQUE DE SULFURE/POLYSULFURE POUR BATTERIES LITHIUM/SOUFRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2016 EP 16382315**

(43) Date of publication of application:
**08.05.2019 Bulletin 2019/19**

(73) Proprietors:
- **Fundación Cidetec**
  **20009 Donostia-San Sebastián (ES)**
- **Repsol, S.A.**
  **28045 Madrid (ES)**

(72) Inventors:
- **BLAZQUEZ MARTÍN, José Alberto**
  **20009 DONOSTIA-SAN SEBASTIÁN (ES)**
- **AZACETA MUÑOZ, Eneko**
  **20009 DONOSTIA-SAN SEBASTIÁN (ES)**
- **LEONET BOUBETA, Olatz**
  **20009 DONOSTIA-SAN SEBASTIÁN (ES)**
- **TENA ZAERA, Ramón**
  **20009 DONOSTIA-SAN SEBASTIÁN (ES)**
- **URDAMPILLETA GONZALEZ, Idoia**
  **20009 DONOSTIA-SAN SEBASTIÁN (ES)**
- **MIGUEL, Oscar**
  **20009 DONOSTIA-SAN SEBASTIÁN (ES)**

(74) Representative: **ZBM Patents - Zea, Barlocci & Markvardsen**
**Rambla Catalunya, 123**
**08008 Barcelona (ES)**

(56) References cited:
**EP-A1- 2 572 402 WO-A1-2015/193293**

- **GONZÁLEZ-PEDRO VICTORIA ET AL: "Ultrafast characterization of the electron injection from CdSe quantum dots and dye N719 co-sensitizers into TiO2using sulfide based ionic liquid for enhanced long term stability", ELECTROCHIMICA ACTA, ELSEVIER SCIENCE PUBLISHERS, BARKING, GB, vol. 100, 28 March 2013 (2013-03-28), pages 35-43, XP028544140, ISSN: 0013-4686, DOI: 10.1016/J.ELECTACTA.2013.03.119**

EP 3 480 881 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application claims the benefit of European Patent Application EP16382315.6 filed on July 4, 2016.

The present invention provides an electrolyte for increasing the performance of a Li/Sulfur rechargeable battery as a power source. The electrolyte and the battery comprising it have many different applications in the fields of portable devices, electronics, stationary applications, consumer goods and transportation.

BACKGROUND ART

Lithium (Li) batteries have dominated the market for the last couple of decades as energy storage devices. However, the current Li batteries cannot easily cope with the demands of last generation machines such as electric vehicles, which require very high capacities and extended cycle life.

Currently a lot of resources are being spent on researching novel rechargeable power sources with ever higher capacities to meet the demands of the transportation and electronic markets.

One of the most promising choices for next-generation batteries are those of the lithium-sulfur type, which are composed of a Li anode and a sulfur cathode. A separator impregnated by a non-aqueous electrolyte which allows the movement of ions but not electrons is placed between the electrodes. Upon discharge, the Li ions from the anode diffuse to the cathode through the electrolyte as the electrons move from the anode to the cathode through the external circuit, effectively delivering power. At this stage, the lithium ions react with the cathode sulfur which is in the form of elemental sulfur ($S_8$) to give soluble long-chain polysulfides ($Li_2S_x$, where x is between 1 and 8), which eventually give reduced insoluble $Li_2S$. Upon charge, an external power source is applied to the battery driving electrons from the cathode back to the anode via an external circuit, while Li ions diffuse back from the cathode to the anode, and the cathode sulfur being oxidized again to $S_8$.

Li-sulfur batteries have a high theoretical energy density because of the high electronegativity of lithium coupled to the high theoretical capacity of sulfur, which is ca. 10-fold higher than transition metal oxides currently in use. Moreover, sulfur is a widely available element, thus making the manufacture of this battery type very attractive from the economic point of view.

In spite of their promising properties at all levels, these batteries are handicapped by a series of limitations which hinder their market deployment. Amongst the most serious issues found are: i) the insulating nature of the sulfur cathode, which has low conductivity; ii) the volume expansion of sulfur during cycling; iii) the behavior associated to the long-chain polysulfides ($Li_2S_x$). This last point poses a serious limitation: upon discharge, the highly soluble polysulfides dissolve into the electrolyte effectively causing a loss of material in the sulfur cathode. Furthermore the dissolved polysulfides diffuse to the lithium anode driven by a difference in chemical potential and concentration, to be finally reduced to $Li_2S$ which deposits in the anode increasing the resistance of the cell and causing a rapid decay of performance. The behavior of polysulfides circulating back and forth between cathode and anode with subsequent cycles of operation is called "shuttle effect" and drives the charging time of the battery towards infinity while at the same time it lowers its peak performance.

Great efforts have been devoted to overcoming the "shuttle effect". A first strategy has been the search for new liquid organic electrolytes in which the polysulfides of the cathode are less soluble. The great majority of electrolytes described in the prior art for Li-sulfur batteries contain lithium salts and organic solvents which, when combined, have been reported to lead to improvements of some extent. Some of the most widely used solvents are ethers such as poly(ethylene glycol), 1,3-dioxolane (DOL), 1,2-dimethoxyethane (DME) or tetra(ethylene glycol) dimethyl ether (TEGDME). They have been shown to have low viscosity which enables fast ion transport. As for the lithium salts, a variety of them is found in the art such as $LiCF_3SO_3$ (Chang et al. "Binary electrolyte based on tetra(ethylene glycol) dimethyl ether and 1,3-dioxolane for lithium-sulfur battery" J. Power Sources 2002, vol. 112, pp.452-460), LiTFSI (US2014170459A1) and others. Although partly successful, liquid organic electrolyte-based strategies suffer from deficiencies such as high sulfur solubility, low thermal stability and the need for considerable amounts of electrolyte for the stabilization of dissolved polysulfides, promoting a reduced cycle life and reduced energy density of the current lithium sulfur batteries.

A second strategy has been to combine lithium salts with ionic liquids (ILs), which are liquids comprised entirely of ions and in which the polysulfides of the cathode could be less soluble. They have also been described to have high lithium ion conductivity. Some IL-based electrolytes described in the art show improved performance because they suppress the dissolution of the polysulfides in the electrolyte, effectively avoiding the loss of cathode material. Such examples include Yang Y. et al. "Effect of cations in ionic liquids on the electrochemical performance of lithium-sulfur batteries" Science China (Chemistry) 2014, vol. 57, pp. 1564-1569, which describes an electrolyte consisting of the lithium salt LiTFSI together with the IL (N-methyl-N-propylpyrrolidone)TFSI. This electrolyte is reported to improve the cycle life and capacity. A second example is found in Park J-W et al. "Ionic liquid electrolytes for lithium-sulfur batteries" J. Phys. Chem. C. 2013, vol. 117, pp. 20531-20541. This reference describes a variety of electrolytes, composed of a

lithium salt together with an IL, tested for performance improvements. It is concluded that strongly donating IL electrolytes do not successfully prevent the shuttle effect, and that a judicious selection of IL must be made to maximize Li ion transport and minimize the drawbacks associated to long-chain polysulfides. The development of new ILs is an active area of research, not only in the development of batteries but also in other technological areas so disparate as gas storage and handling, pharmaceutical development and solar energy conversion (see for instance EP2572402B1).

Typically an additional component found in organic solvent-based or ionic liquid-based electrolytes such as those described above is an additive such as $LiNO_3$ or $P_2S_5$. These additives are reported to enhance the cycle life of the Li-sulfur batteries by inducing a more effective and stable solid electrolyte interface.

WO2015193293 relates to an electrolyte for a lithium sulfur battery, the electrolyte comprising a ionic liquid derived from an ammonium, a phosphonium or a sulfonium cation and a sulfide anion. It is also mentioned that the electrolyte may comprise a lithium salt.

In view of what is described above, new Lithium-sulfur batteries, featuring improved electrolytes in terms of capacity, cycle life and costs would represent a huge step forward in the development of next-generation energy storage devices.

SUMMARY OF THE INVENTION

Inventors have surprisingly found that an electrolyte comprising a sulfide/polysulfide ionic liquid with an organic cation, a lithium salt, an organic solvent, and optionally at least one additive, provides superior performance to the electrolytes found in the art for use in a lithium-sulfur battery.

The ionic liquid comprised in the electrolyte of the invention has the right properties to avoid the loss of active materials of the cathode while at the same time providing the desired viscosity to avoid reducing the diffusion speed of the lithium ions. Therefore this electrolyte represents a promising improvement to what is found in the prior art for lithium-sulfur batteries.

Thus, a first aspect of the invention is an electrolyte comprising at least one lithium salt, at least one non-aqueous solvent and an ionic liquid comprising a compound of a Formula 1: $M_2S_y/M_2(S_m)_y$ where M is an organic cation, m is an integer from 1 to 16 and y is the integer indicating the stoichiometry necessary to neutralize the positive charge of 2M; the compound of a Formula 1: $M_2S_y/M_2(S_m)_y$ contains a molar ratio of sulfide $M_2S_y$ and added elemental sulfur from 1:1.01 to 1:15.

As it is seen in the experimental data found below and unlike what it could have been expected, the properties in terms of both good cycle life and high capacity are achieved at the same time, and therefore, it represents an improvement when compared to other ionic liquids found in the art such as the one disclosed in Yang et al. (*ibid*) or with conventional liquid organic electrolytes. As it is seen in comparisons, the electrolyte disclosed in US2014170459A1 (*ibid*) reports cycle life in the order of 40-50 cycles of charge/discharge with a stable specific capacity 30-50% higher than others reported in the state of the art, whereas the electrolyte of the invention reports cycle life of ca. 100 with similar capacities, that is a life that is extended 2-fold, an achievement that would represent a great improvement when implemented in devices such an electric automobile.

In addition, unlike the organosulfur compounds used in the art to saturate the electrolyte, which have the S covalently attached, the ionic liquid used in the invention incorporates the sulfur as sulfide/polysulfide free anions. Advantageously, it allows increasing the amount of sulfides in the electrolyte without increasing the amount of lithium. Remarkably, an additional advantage of the electrolyte of the invention is the lower cost of energy stored as it entails improving the specific energy density per gram of sulfur, as well as reducing the amount of needed electrolyte and therefore having an impact on the final energy density of the full system.

A second aspect of the invention is a process for preparing the electrolyte of the first aspect of the invention comprising the steps of: a) Dissolving the ionic liquid in the at least one non-aqueous solvent; b) Adding sulfur to the resulting solution of step a); c) Adding the at least one lithium salt to the result of step b); d) Optionally, adding the at least one additive to the result of step c); e) Stirring for an appropriate period of time to obtain the electrolyte. A third aspect of the invention is a lithium-sulfur battery comprising the electrolyte according to the first aspect of the invention.

A fourth aspect of the invention is the use of the battery according to the third aspect of the invention in electronic, consumer and transportation devices.

BRIEF DESCRIPTION OF THE DRAWINGS

FIG.1. Cycling test at C/10 of 1-alkyl-3-alkylimidazolium organic cation based sulfide/polysulfide ionic liquid electrolytes containing cells, at different concentrations.

FIG.2. Cycling test at C/10 of 1-alkyl-3-alkylimidazolium organic cation based sulfide/polysulfide ionic liquid electrolytes containing cell at 2.5 wt%.

FIG.3. Cycling test at C/10 of N-alkyl-N-alkylpyrrolidinium organic cation based/polysulfide sulfide ionic liquid electrolytes containing cells at 10 wt%.

FIG.4. Cycling test at C/10 of 1-alkyl-3-alkylimidazolium organic cation based/polysulfide ionic liquid electrolytes containing cells at 2.5 wt% of polysulfide ionic liquid electrolyte at 1:10 and 1:4 $M_2S_y$ sulfide/sulfur molar ratio.

FIG.5. Cycling test at C/10 of 1-alkyl-3-alkylimidazolium organic cation based/polysulfide ionic liquid electrolytes containing cells at 9.0 wt% of polysulfide ionic liquid electrolyte at 1:10 and 1:4 $M_2S_y$ sulfide/sulfur molar ratio.

FIG.6. Cycling test at C/10 of 1-alkyl-3-alkylimidazolium organic cation based/polysulfide ionic liquid electrolytes containing cells at 2.5 wt% and 9.0 wt% of polysulfide ionic liquid electrolyte at 1:10 $M_2S_y$ sulfide/sulfur molar ratio.

DETAILED DESCRIPTION OF THE INVENTION

For the sake of understanding, the following definitions are included and expected to be applied throughout description, claims and drawings.

The term "ionic liquid" as used herein refers to a salt that is in the liquid state at relatively low temperatures (<100 °C). The ionic liquids species are constituted by voluminous ions, thus small charge densities, which lead to weak Coulombic interaction with their counterparts. Properties such as low melting temperature, negligible vapor pressure and high ionic conductivities derive from this unconventional nature. In this invention, the term "ionic liquid" also refers to IL-based polymeric system, obtained by covalent bond (PILs - polymeric/polymerized ionic liquids or poly(ionic liquid)s) or non-covalent bond (polymer blending with ionic liquid species or polymerizable monomers in ionic liquid species).

The term PILS refer to a special type of polyelectrolytes which bear ionic liquid species (as defined above) in each of the repeating units. Thus, the cationic or anionic centers are constrained to the repeating units in the polymer chain. It is worth noting that although ILs species are in a liquid state near room temperature, PILs are in fact solid in most cases and combine the unique properties of ionic liquids species with the flexibility and properties of macromolecular architectures. Different types of copolymers (random, alternating, block) and macromolecular architectures such as branched, dendritic or ramified structures are potentially possible. This makes the number of PILs that can be synthesized extremely high due to all of the potential combinations between cations, anions and different polymer backbones and architectures. PILs can be synthesized via two basic strategies:

- Direct polymerization of IL monomers by any polymerization technique known by those with ordinary skill in the art, such as conventional and controlled radical polymerizations, ring opening metathesis polymerization, step-growth polymerization, and chemical or electrochemical oxidative polymerization. Most of these polymers have been synthesized using conventional radical polymerization. Examples include vinylic, styrenic, (meth)acrylic and (meth)acrylamide , ethylene glycol, vinyl ether and norbornene monomers.
  Examples of PILs synthesized by modern polymerization methods such as atom transfer radical polymerization (ATRP), reversible addition fragmentation transfer polymerization (RAFT), ring-opening polymerization and ring-opening methathesis polymerization processes include vinilyc, acrylic, styrenic IL monomers. In addition to linear homopolymers, cross-linked PIL networks have been synthesized by radical polymerization methods. Examples include bi- or trifunctional acrylic or styrenic IL monomers such as imidazolium diacrylate and distyrenic and vinylic monomers, tetraalkylamonium difunctional styrenic monomers, and liquid crystal triacrylate imidazolium monomers.
- Other examples of PILs having cations in their backbone have also been synthesized by step-growth or polycondensation polymerization methods. Examples include poly(alkyl imidazolium) or poly (alkyl pyridinium), polymers by direct quaternization of a dihalide with a dimidazole or a dipyridine molecule, ionic polyolefins, diallylimidazolium IL derivatives and imidazolium functional polyimides.
- PILs have also been synthesized by chemical or electrochemical oxidative polymerization. Examples include pyrrole or thiophene monomers. Chemical modification of existing polymers with molecules bearing the ionic liquid species. Examples include imidazolium-based PILs or diblock copolymers such as (polystyrene-block-poly(chloromethylstyrene) copolymer (PS-b-PCMS).

The term polymer blending with ionic liquid species refers to a mixture in which firstly, the polymer is synthesized and, subsequently, blended with the IL species in an appropriate solvent to form a homogeneous mixing solution, which is then casted into a pre-designed shape and dried to remove the solvent to solidify the IL. Polymer materials employed include homopolymers, copolymers, hydrocarbon polymers and block copolymers. Examples of these polymers are

polyethylene oxide (PEO), polyethylene (PE), polypropylene (PP), polyvinyl chloride (PVC), polyacrylonitrile (PAN), poly(methyl methacrylate) (PMMA), polyvinyl alcohol (PVA), polyvinylidene fluoride (PVDF), poly(vinylidenefluoride-hexafluoropropylene) (PVdF-HFP), poly(trimethylene carbonate) (PTMC), polyethylene glycol (PEG), polypropylene glycol (PPG), polycaprolactone (PCL).

The term polymerizable monomers in ionic liquid species refers to synthesis, in which ILs species and all reactants (vinyl monomers and the initiator for the in situ polymerization; glycol monomers and crosslinking agents for crosslinking reaction) are mixed before triggering polymerization or crosslinking. Examples of vinyl monomers are methyl methacrylate (MMA), acrylonitrile (AN), vinyl acetate (VA), styrene (ST), HEMA, methyl acrylate (MA), and acrylamide (AAM). Examples of glycol monomers are PEG, PPG, among others known by those with ordinary skill in the art.

The term "non-aqueous solvent" as used herein refers to any liquid other than water in which a solute may be dissolved.

As mentioned above, the first aspect of the present invention is an electrolyte comprising at least one lithium salt, at least one non-aqueous solvent and an ionic liquid comprising a compound of a Formula 1: $M_2S_y/M_2(S_m)_y$ where M is an organic cation, m is an integer from 1 to 16 and y is the integer indicating the stoichiometry necessary to neutralize the positive charge of 2M; the compound of Formula 1: $-M_2S_y/M_2(S_m)_y$ contains a molar ratio of sulfide $M_2S_y$ and added elemental sulfur from 1:1.01 to 1:15.

In a particular embodiment of the first aspect of the invention, the ionic liquid is a non-polymeric ionic liquid.

In a particular embodiment of the first aspect of the invention, the ionic liquid is a polymeric ionic liquid.

In a particular embodiment of the first aspect of the invention, the ionic liquid is a polymeric ionic liquid wherein the polymeric ionic liquid is obtainable by direct polymerization of ionic liquid monomers by any polymerization technique known by those with ordinary skill in the art, such as conventional and controlled radical polymerizations, ring opening metathesis polymerization, step-growth polymerization, and chemical or electrochemical oxidative polymerization.

In a particular embodiment of the first aspect of the invention, the ionic liquid is a polymeric ionic liquid wherein the polymeric ionic liquid is obtainable by chemical modification of existing polymers with molecules bearing the ionic liquid species.

In a particular embodiment of the first aspect of the invention, the ionic liquid is a non-polymeric ionic liquid taking part in polymer blends, in which ionic liquid species are blended with polymers in an appropriate solvent o form a homogeneous mixing solution, then casted into a pre-designed shape and dried to remove the solvent to solidify the IL.

In a particular embodiment of the first aspect of the invention, the ionic liquid is a non-polymeric ionic liquid in which ionic liquid species are mixed with polymerisable monomers and all reactants (vinyl monomers and the initiator for the in situ polymerization) before triggering polymerization or crosslinking.

In a particular embodiment of the first aspect of the invention, the ionic liquid is a mixture of non-polymeric and polymeric ionic liquids.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:1.01 to 1:15.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:2 to 1:10.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:5 to 1:15.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:7 to 1:10.

In a particular embodiment of the first aspect of the invention, the electrolyte is an electrolyte wherein the compound of Formula 1: $M_2S_y/M_2(S_m)_y$ represents from the 0.01 to 40 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ represents from the 0.1 to 20 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ represents from the 0.1 to 15 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ represents from the 0.1 to 10 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ represents from the 0.1 to 9 wt% (weight) with respect to the total weight of the electrolyte.

In a particular embodiment of the first aspect of the invention, the electrolyte is an electrolyte wherein the

compound of Formula 1: $M_2S_y/M_2(S_m)_y$ represents from the 1 to 15 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ represents from the 1 to 10 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ represents from the 1 to 9.5 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ represents from the 1 to 9 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ represents from the 2.5 to 10 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:1.01 to 1:15, and the electrolyte is an electrolyte wherein the compound of Formula 1: $M_2S_y/M_2(S_m)_y$ represents from 0.1 to 15 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:1.01 to 1:15, and the electrolyte is an electrolyte wherein the compound of Formula 1: $M_2S_y/M_2(S_m)_y$ represents from 1 to 10 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:1.01 to 1:15, and the electrolyte is an electrolyte wherein the compound of Formula 1: $M_2S_y/M_2(S_m)_y$ represents from 1 to 9.5 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:1.01 to 1:15, and the electrolyte is an electrolyte wherein the compound of Formula 1: $M_2S_y/M_2(S_m)_y$ represents from 1 to 9 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:2 to 1:10, and the electrolyte is an electrolyte wherein the compound of Formula 1: $M_2S_y/M_2(S_m)_y$ represents from 0.1 to 10 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:2 to 1:10, and the electrolyte is an electrolyte wherein the compound of Formula 1: $M_2S_y/M_2(S_m)_y$ represents from 1 to 10 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:2 to 1:10, and the electrolyte is an electrolyte wherein the compound of Formula 1: $M_2S_y/M_2(S_m)_y$ represents from 2.5 to 10 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:5 to 1:15, and the electrolyte is an electrolyte wherein the compound of Formula 1: $M_2S_y/M_2(S_m)_y$ represents from 0.01 to 40 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:5 to 1:15, and the electrolyte is an electrolyte wherein the compound of Formula 1: $M_2S_y/M_2(S_m)_y$ represents from 0.1 to 20 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:5 to 1:15, and the electrolyte is an electrolyte wherein the compound of Formula 1: $M_2S_y/M_2(S_m)_y$ represents from 1 to 15 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:5 to 1:15, and the electrolyte is an electrolyte wherein the compound of Formula 1: $M_2S_y/M_2(S_m)_y$ represents from 2.5 to 10 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:7 to 1:10, and the electrolyte is an electrolyte wherein the compound of Formula 1: $M_2S_y/M_2(S_m)_y$ represents from 0.01 to 40 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:7 to 1:10, and the electrolyte is an electrolyte wherein the compound of Formula 1: $M_2S_y/M_2(S_m)_y$ represents from 0.1 to 20 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:7 to 1:10, and the electrolyte is an electrolyte wherein the compound of Formula 1: $M_2S_y/M_2(S_m)_y$ represents from 1 to 15 wt% (weight) with respect to the total weight of the electrolyte.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:7 to 1:10, and the electrolyte is an electrolyte wherein the compound of Formula 1: $M_2S_y/M_2(S_m)_y$ represents from 2.5 to 10 wt% (weight) with respect to the total weight of the electrolyte.

In a particular embodiment of the first aspect of the invention, the electrolyte is an electrolyte wherein M bears at least one positive charge.

In a particular embodiment of the first aspect of the invention, the electrolyte is an electrolyte wherein M bears two positive charges.

In a particular embodiment of the first aspect of the invention, the electrolyte is an electrolyte wherein M bears three positive charges.

In a particular embodiment of the first aspect of the invention, the electrolyte is an electrolyte wherein M bears four positive charges.

In a particular embodiment of the first aspect of the invention, the electrolyte is an electrolyte wherein M bears five positive charges.

In a particular embodiment of the first aspect of the invention, the electrolyte is an electrolyte wherein M comprises at least one charged atom selected from the group consisting of $N^+$, $C^+$, $P^+$, $S^+$ and combinations thereof.

In a particular embodiment of the first aspect of the invention, the electrolyte is an electrolyte wherein M is an organic cation with a formula selected from the group consisting of:

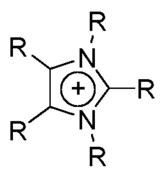 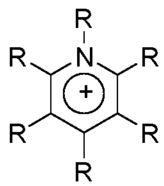 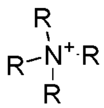 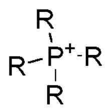 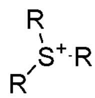

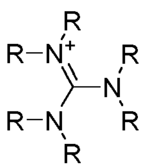 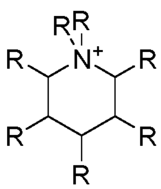 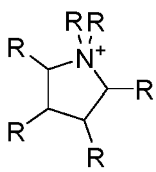 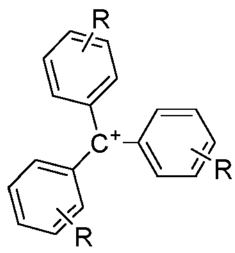

wherein the substituents R are the same or different and are
(i) selected from the group consisting of:

$C_1$-$C_{30}$ alkyl, $C_1$-$C_{30}$ alkoxy, $C_1$-$C_{30}$ alkyl sulfide, $C_3$-$C_{12}$ cycloalkyl, $C_1$-$C_{12}$ heterocyclyl, $C_2$-$C_8$ alkenyl, $C_2$-$C_8$ alkynyl, $C_6$-$C_{12}$ aryl, $C_1$-$C_{12}$ heteroaryl, alkylaryl, alkylheteroaryl, alkylcyclyl, alkylheterocyclyl, $Ph_2P(O)$-, $Ph_2P$-, $Me_2P(O)$-, $Me_2P$-, $Ph_2P(S)$-, $Me_2P(S)$-, $Ph_3P$=N-, $Me_3P$=N-, $FSO_2CF_2$-, $ClSO_2(CF_2)_n$-, $HSO_3(CF_2)_n$-, $HCO_2(CF_2)_n$-, $FSO_2NHSO_2(CF_2)_n$-, $CF_3SO_2NHSO_2(CF_2)_n$-, $C_nF_{2n+1}$ $SO_2NHSO_2(CF_2)_n$-, $FSO_2(CF_2)_n$-, $ClSO_2(CF_2)_n$-, $C_nF_{2n+1}$ $SO_2NH$ $(CF_2)_n$- , -OH, -F, -Cl, -Br, -I, -CN, $-NO_2$, $-SO_3H$ and $C_1$-$C_6$ hydroxy alkyl,

wherein n is an integer having a value from 1 to 48.

Of note, by a formula like: $HCO_2(CF_2)_n$- it is here understood a $HCO_2$ group covalently linked to a chain of n repetitions of -$CF_2$-. Thus, for instance, the formula $HCO_2(CF_2)_5$- could also be expressed as $HCO_2$-$CF_2$-$CF_2$-$CF_2$-$CF_2$-$CF_2$-.

(ii) R is part of a polymer chain, linear, branched or cross-linked,

and wherein two adjacent substituents R may be linked to each other pairwise to form a polycyclic ring system.

In a particular embodiment of the first aspect of the invention, the electrolyte is an electrolyte wherein the organic cation is selected from the group consisting of pyridinium, imidazolium, dialkylimidazolium, trialkylimidazolium, dialkylpyrrolidinium, mono or dialkylpyridinium, trialkylsulfonium, oxazolium, thiazolium, oxadiazolium, triazolium, piperidinium, pyrazolium, pyrimidinium, pyrazinium, triazinium, phosphonium, sulfonium, carbazolium, indolium, quaternary amines, quaternary phosphonium and combinations thereof.

In a particular embodiment of the first aspect of the invention, the electrolyte optionally comprises at least one additive, wherein the at least one additive is selected from the group consisting of $LiNO_3$, ethylene carbonate (EC), dimethyl carbonate (DMC), methylethyl carbonate (MEC), diethyl carbonate (DEC), ethyl propionate, methyl propionate, propylene carbonate (PC), gamma.-butyrolactone (y-BL), acetonitrile (AN), ethyl acetate (EA), propyl formate (PF), methyl formate (MF), toluene, xylene or methyl acetate (MA), fluoroethylene carbonate (FEC), vinylene carbonate (VC), dimethyl acetamide (DMAc), allyl ethyl carbonate (AEC), diphosphorous pentasulfide ($P_2S_5$), fluorinated ethers and combinations thereof.

In a particular embodiment of the first aspect of the invention, the electrolyte is an electrolyte wherein the at least one additive has a concentration from 0.05 to 6 M.

In a particular embodiment of the first aspect of the invention, the electrolyte is an electrolyte wherein the at least one additive has a concentration from 0.1 to 2M.

In a particular embodiment of the first aspect of the invention, the electrolyte is an electrolyte wherein the at least one additive has a concentration from 0.1 to 0.5M.

In a particular embodiment of the first aspect of the invention, the electrolyte is an electrolyte wherein the at least one lithium salt is selected from the group consisting of bis(trifluoromethyl sulfonylimide lithium) ($LiN(CF_3SO_2)_2$, commonly named as LiTFSI, lithium perchlorate ($LiClO_4$), lithium hexafluorophosphate ($LiPF_6$), lithium borofluoride ($LiBF_4$), lithium hexafluoroarsenide (LiAsF6), lithium trifluoro-metasulfonate ($LiCF_3SO_3$), lithium bis(oxalato)borate (LiBOB), lithium oxalyldifluoroborate ($LiBF_2C_2O_4$), lithium nitrate ($LiNO_3$), Li-Fluoroalkyl-Phosphates ($LiPF_3(CF_2CF_3)_3$), lithium bisperfluoroethysulfonylimide (LiBETI), an ionic liquid lithium salt and combinations thereof.

In a particular embodiment of the first aspect of the invention, the electrolyte is an electrolyte wherein the at least one lithium salt has a concentration from 0.01 to 10M.

In a particular embodiment of the first aspect of the invention, the electrolyte is an electrolyte wherein the at least one lithium salt has a concentration from 0.1 to 3.0M.

In a particular embodiment of the first aspect of the invention, the electrolyte is an electrolyte wherein the at least one lithium salt has a concentration from 0.1 to 2.0M.

In a particular embodiment of the first aspect of the invention, the electrolyte is an electrolyte wherein the at least one lithium salt has a concentration from 0.1 to 1.0M.

In a particular embodiment of the first aspect of the invention, the electrolyte is an electrolyte wherein the at least one non-aqueous solvent is selected from the group consisting of 1,3-dioxolane (DOL), 1,2-dimethoxyethane (DME), tetraethylene glycol dimethylether (TEGDME), Poly(ethylene glycol)dimethyl ether (PEGDME), diethylene glycol dibutyl ether (DEGDBE), 2-ethoxyethyl ether (EEE), sulfone, sulfolane, tetrahydrofuran (THF), 2-Methyltetrahydrofuran (2Me-THF), Diethoxyethane, ethylene carbonate (EC), dimethyl carbonate (DMC), ethyl methyl carbonate (MEC), diethyl carbonate (DEC), ethyl propionate, methyl propionate, propylene carbonate (PC), gamma-butyrolactone (y-BL), acetonitrile (AN), adiponitrile (AN), Glutaronitrile, ethyl acetate (EA), propyl formate (PF), methyl formate (MF), toluene, xylene or methyl acetate (MA), fluoroethylene carbonate (FEC), vinylene carbonate (VC), dimethyl acetamide (DMAc), allyl ethyl carbonate (AEC), fluorinated ethers and combinations thereof.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:5 to 1:15, and the electrolyte is an electrolyte wherein the compound of Formula 1: $M_2S_y/M_2(S_m)_y$ represents from the 2.5 to 10 wt% (weight) with respect to the total weight of the electrolyte, and wherein the at least one additive is $LiNO_3$, the at least one lithium salt is LiTFSI, and the at least organic solvent is a mixture of DOL and DME.

In a particular embodiment of the first aspect of the invention, the electrolyte is electrolyte wherein the compound of Formula 1: $M_2S_y/M_2(S_m)_y$ contains a molar ratio of sulfide $M_2S_y$ and added elemental sulfur from 1:7 to 1:10, and the electrolyte is an electrolyte wherein the compound of Formula 1: $M_2S_y/M_2(S_m)_y$ represents from the 2.5 to 10 wt% (weight) with respect to the total weight of the electrolyte, and wherein the at least one additive is $LiNO_3$, the at least one lithium salt is LiTFSI, and the at least organic solvent is a mixture of DOL and DME.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:7 to

1:10, and the electrolyte is an electrolyte wherein the compound of Formula 1: $M_2S_y/M_2(S_m)_y$ represents from the 2.5 to 10 wt% (weight) with respect to the total weight of the electrolyte, and wherein M is 1-Butyl-3-Methyl imidazolium and wherein the at least one additive is $LiNO_3$, the at least one lithium salt is LiTFSI, and the at least organic solvent is a mixture of DOL and DME.

In a particular embodiment of the first aspect of the invention, the electrolyte is an electrolyte wherein the compound of Formula 1: $M_2S_y/M_2(S_m)_y$ contains a molar ratio of sulfide $M_2S_y$ and added elemental sulfur from 1:7 to 1:10, and the electrolyte is an electrolyte wherein the compound of Formula 1: $M_2S_y/M_2(S_m)_y$ represents from the 2.5 to 10 wt% (weight) with respect to the total weight of the electrolyte, and wherein M is N-Alkyl-N- Alkyl pyrrolidonium and wherein the at least one additive is $LiNO_3$, the at least one lithium salt is LiTFSI, and the at least organic solvent is a mixture of DOL and DME.

As it has been mentioned above, a second aspect of the invention is a process for preparing the electrolyte as defined above comprising the steps of:

a) Dissolving the ionic liquid in the at least one non-aqueous solvent;
b) Adding sulfur to the resulting solution of step a); c) Adding the at least one lithium salt to the result of step b); d) Optionally, adding the at least one additive to the result of step c); e) Stirring for an appropriate period of time to obtain the electrolyte.

In a particular embodiment of the second aspect of the invention, in step e) the stirring is for at least 12 hours.

In a particular embodiment of the second aspect of the invention, in step a) the non-aqueous solvent is a mixture of DME and DOL and in step d) the at least one additive is $LiNO_3$ and the at least one lithium salt of step c) is LiTFSI.

In a particular embodiment of the second aspect of the invention, in step b) sulfur is added so that the final ratio of sulfide to sulfur is 1:10.

In a particular embodiment of the second aspect of the invention, in step a) the non-aqueous solvent is a mixture of DME and DOL in a ratio 1:1.

In a particular embodiment of the second aspect of the invention, the process comprises the steps of: a) The ionic liquid is dissolved in a non-aqueous solvent which is a mixture of DME and DOL in a ratio 1:1, with magnetic stirring; b) Sulfur is added with magnetic stirring to the result of step a) so that the final ratio of sulfide to sulfur is 1:10; c) The at least one lithium salt is added to the result of step b); d) Optionally, one additive is added to the result of step c); e) Magnetic stirring is kept for at least 12 hours.

As it has been mentioned above, a third aspect of the invention is a lithium-sulfur battery comprising the electrolyte according to the first aspect of the invention.

In a particular embodiment of the third aspect of the invention, the battery comprises a cathode comprising sulfur and carbon.

In a particular embodiment of the third aspect of the invention, the battery comprises an anode comprising lithium or graphite or silicon, or a combination thereof.

Throughout the description and claims the word "comprise" and variations of the word, are not intended to exclude other technical features, additives, components, or steps. Furthermore, the word "comprise" and its variations encompasses the term "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

## EXAMPLES

### A) Material and Equipment

Elemental sulfur (≥99.5%) was purchased from Sigma-Aldrich whereas sodium sulfide nonahydrate ($Na_2S{\cdot}9H_2O$, ≥98%), methanol (synthesis grade) and acetonitrile (HPLC grade) from Scharlab. Solvionic provided N-butyl-N-methylpyrrolidinium chloride (98%) and 1-butyl-3-methylimidazolium chloride (98 %). Ultrapure water (18 MΩ·cm) was obtained from a Millipore equipment.

Electrolyte solvents, 1-3Dioxolane (DOL, Battery grade) and dimethoxyethane (DME; Battery grade) were provided by BASF, and further treated with molecular sieves (3Å, Sigma-Aldrich) to keep moisture level below 20 ppm, which was measured by Karl Fischer TitroLine KF Trace equipment from Schott Instruments using Hydranal-Coulomat AG reactant). It must be noted that the molecular sieves were rinsed with acetone several times and subsequently annealed at 200 °C for 6 h, previously to their use.
Lithium salts, LiTFSI (99 %) and $LiNO_3$ (≥Fluka 98.0 %) were acquired from Acros-Organics and Fluka, respectively.

A rotary evaporator (HEIDOLPH, Laborota 4000 eco) and freeze drying equipment (Cryodos-50, IMA-TELSTAR) were used for the synthesis of the ionic liquids. Finally, the electrochemical characterization of the cells by means of cycling test was performed using a Basytec CTS system (BASYTEC GMBH).

1. - Sulfide ionic liquid synthesis:

The synthesis of the sulfide ionic liquid (IL) of the invention was carried out by inducing an anion exchange between chloride ionic liquid and $Na_2S$ The synthesis of two sulfide ionic liquids of the invention, through two different ion exchange routes, is presented (either one or the other route can be used for any ionic liquid synthesis of the invention):

- Freeze drying route: An equimolar aqueous solution of N-butyl-N-methylpyrrolidinium chloride ionic liquid and $Na_2S{\cdot}9H_2O$ was prepared in 30 mL ultrapure water in a 250 mL round bottom flask. Then, the dissolution was frozen in liquid nitrogen and connected to a high vacuum pump to remove water by sublimation; a pale yellowish solid was obtained. Subsequently, the sulfide ionic liquid was extracted with cold acetonitrile where NaCl is not soluble. The whitish solid (NaCl) was removed by filtration and the liquid phase was placed in a rotary evaporator to remove acetonitrile at 30 °C. Once the acetonitrile was completely removed, the sulfide ionic liquid was obtained.
- Rotary evaporator route: Firstly, $Na_2S{\cdot}9H_2O$ was immersed in synthesis grade methanol and rotary evaporated at 40 °C to eliminate $H_2O$. The procedure was repeated three times. Subsequently, 1-butyl-3-methylimidazolium chloride ionic liquid was added at equimolar ratio to $Na_2S$ and 30 mL methanol. The mixture was rotary evaporated at 30 °C. It must be noted that the ion exchange took place during the liquid phase elimination in the rotary evaporator. Once the methanol was completely eliminated, the slurry was cooled down in the freezer. Sulfide ionic liquid was extracted by dissolving in cold acetonitrile. The remaining white solid (NaCl) was removed by filtration and the liquid phase was placed in a rotary evaporator to remove acetonitrile at 30 °C. Once the acetonitrile was completely removed, the sulfide ionic liquid was obtained.

The material obtained from either freeze drying or rotary evaporator route was further purified by immersing in ethyl acetate where impurities such as solvent traces (acetonitrile and methanol) or moisture were dissolved but the ionic liquid did not. Therefore, most of the ethyl acetate phase can be manually removed and the remaining ethyl acetate traces in the ionic liquid can be easily dried in a vacuum line at 30 °C overnight.

2. - Electrolyte preparation:

The subsequent procedure was followed in order to prepare the polysulfide ionic liquid based electrolytes of the invention:
The percentage of ionic liquid in the electrolyte is referred to the amount of polysulfide ionic liquid in the electrolyte formed from the dissolution of sulfide ionic liquid and sulfur. Thus, the molar ratio of sulfide ionic liquid/sulfur is needed to be defined. Here it is explained the procedure for 10 wt% polysulfide ionic liquid electrolyte at 1:10 sulfide/sulfur molar ratio. Firstly, 0.121 g of N-Butyl-N-methylpyrrolidonium sulfide was dissolved in 2 mL Dioxolane:Dimetoxiethane (1:1) volume and kept under magnet stirring until the material was dissolved. Then, 0.122 g sulfur was added and kept under vigorous magnet stirring. Finally, 0.044 g $LiNO_3$ (0.32 M) and 0.218 g LiTFSI (0.38 M) salts were added. The electrolyte was kept under magnet stirring for at least 24 h to induce long polysulfide chain formation.

3. - Materials and electrode processing:

For the preparation of the cathode composite, elemental sulfur (Sigma-Aldrich, 100-mesh particle size) and carbon black (Ketjenblack EC-600JD,AkzoNobel) were ball milled (Restch, PM100) for 3 h at 300 rpm. The mixture was heated at 150 °C for 6 h under argon condition, then the temperature was increased to 300 °C and kept for 3 h to vaporize the superfluous sulfur on the outer surface of carbon spheres, diffusing entirely into the pores. After cooling down to room temperature, the sulfur-carbon composite was obtained.
Cathode was prepared by mixing sulfur-carbon composite, conductive carbon black (Super C45, Timcal) and polyvinylidene fluoride (PVDF,BASF) in a weight ratio of 60:30:10 and using N-methylpyrrolidone (NMP, Sigma-Aldrich) as solvent. The resultant slurry was cast onto aluminum foil using the doctor blade technique and dried at 60 °C for 2h.
The electrochemical cells were prepared as 2025 coin-type cells and assembled in a dry room using the prepared cathode, a polyethylene separator (Celgard 2500), the prepared electrolyte as previously described and lithium foil (Rockwood lithium) as the negative electrode.

B) Results

4. - Electrochemical testing:

Electrochemical testing was carried out in a potential range between 1.7 V and 2.6 V with respect to Li/Li+ using a battery cycler Basytec CTS system (BASYTEC GMBH, Germany) using a BASYTEC (Germany) battery cycler. The cells were cycled at charge and discharge rates of C/10 (with 1C = 1,672 mA gsulfur-1). All electrochemical experiments were carried out under stable environmental conditions.

FIG. 1 shows the cells with electrolytes containing 10 wt% and 2.5 wt% of polysulfide ionic liquid electrolyte at 1:10 sulfide/sulfur molar ratio, in which the organic cation is 1-alkyl-3-alkyl'imidazolium. The results obtained -in a cycling test at C/10- demonstrate that cells containing sulfide polysulfide based IL electrolytes improve the specific capacity of the cell when increasing ILs content.

FIG. 2 shows a cycling test of the electrolyte containing 2.5 wt% of polysulfide ionic liquid electrolyte at 1:10 sulfide/sulfur molar ratio, with organic cation 1-alkyl-3-alkyl'imidazolium. As can be seen, an improvement of cycle life is observed maintaining the specific capacity of the cell around 1300 mAh $gsulfur^{-1}$. Moreover, the addition of the sulfide polysulfide based IL increases the specific capacity of the technology in 40% respect to the electrolyte without IL, maintaining cycle life up to 100 cycles.

On the other hand, FIG. 3 shows the cells with ionic liquid comprising N-alky-N-alkyl'pyrrolidinium organic cation which has been tested at C/10 rate, with 10 wt% polysulfide ionic liquid electrolyte at 1:10 sulfide/sulfur molar ratio. As can be observed, the specific capacity of the cells -containing this ionic liquid in the electrolyte formulation- is higher than the electrolyte without IL, maintaining cycle life up to 100 cycles, as can be observed in FIG. 2 as well.

FIG.4 shows capacity (mA·h/g) versus cycle life with electrolytes containing 2.5 wt% of sulfide/polysulfide ionic liquid electrolyte at 1:10 and 1:4 sulfide/sulfur molar ratio, in which the organic cation is 1-alkyl-3-alkylimidazolium. The results obtained -in a cycling test at C/10- demonstrate that cells containing sulfide polysulfide based IL electrolytes improve the specific capacity of the cell when increasing the $M_2S_y$ sulfide/sulfur molar ratio.

As can be seen in the FIG.4, it serves as an unambiguous proof of the beneficial effect of the additive in terms of the increase in capacity when the $M_2S_y$ sulfide/sulfur ratio increases. In this way, in spite of the fact that the IL_1:4_2.5 wt% shows a slightly increase respect to the standard electrolyte, the electrolyte within the range of the claim, close to the higher limit, IL_1:10_2.5 wt%, shows an important increase in the capacity:

No IL = 900 mA h/g → R(1:4) = 1000 mA·h/g → R(1:10) = 1300 mA·h/g.

Electrolytes containing imidazolium based ionic liquid with $M_2S_y$ sulfide/sulfur ratio higher than 1:15 surpasses the solubility limit of the components, thus resulting in the presence of a precipitate.

FIG.5 shows capacity (mA·h/g) versus cycle life with electrolytes containing 9.0 wt% of sulfide/polysulfide ionic liquid electrolyte at 1:10 and 1:4 $M_2S_y$ sulfide/sulfur molar ratio, in which the organic cation is 1-alkyl-3-alkylimidazolium. The results obtained -in a cycling test at C/10- demonstrate that cells containing sulfide polysulfide based IL electrolytes improve the specific capacity of the cell when increasing the $M_2S_y$ sulfide/sulfur molar ratio.

As can be observed in FIG.5, the capacity (mA·h/g) increases respect to the standard electrolyte and with the $M_2S_y$ sulfide/sulfur ratio, and it is higher in the electrolyte in which the ratio is close to the higher limit (IL_1 :10_9.0 wt%).

No IL = 900 mA h/g → R(1:4) = 1110 mA·h/g → R(1:10) = 1500 mA·h/g.

It is not included the electrolyte which overcomes the range of the claim because it surpasses the solubility limit of the components.

FIG.6 shows capacity (mA·h/g) versus cycle life with electrolytes containing 2.5 wt% and 9.0 wt% of sulfide/polysulfide ionic liquid electrolyte at 1:10 sulfide/sulfur molar ratio, in which the organic cation is 1-alkyl-3-alkylimidazolium. The results obtained -in a cycling test at C/10- demonstrate that cells containing sulfide/polysulfide based IL electrolytes improve the specific capacity of the cell when increasing the $M_2S_y$ sulfide/sulfur molar ratio.

As can be observed in FIG.6, when it compares two electrolytes with the same $M_2S_y$ sulfide/sulfur ratio 1:10, the capacity (mA·h/g) versus cycle life increases with the percentage (wt%) of the imidazolium based IL in the electrolyte.

No IL = 900 mA h/g → R(1:4) = 1300 mA·h/g → R(1:10) = 1500 mA·h/g.

In summary, these results indicate that the electrolyte of the invention has improved properties in terms of cycle life and capacity, and it should also be emphasized that its manufacture should have decreased cost as it entails the use of lower quantities of materials in order to achieve the same cell capacity.

REFERENCES CITED IN THE APPLICATION

Chang et al. "Binary electrolyte based on tetra(ethylene glycol) dimethyl ether and 1,3-dioxolane for lithium-sulfur battery" J. Power Sources 2002, vol. 112, pp.452-460

US2014170459A1

Yang Y. et al. "Effect of cations in ionic liquids on the electrochemical performance of lithium-sulfur batteries" Science China (Chemistry) 2014, vol. 57, pp. 1564-1569

Park J-W et al. "Ionic liquid electrolytes for lithium-sulfur batteries" J. Phys. Chem. C. 2013, vol. 117, pp. 20531-20541


**Claims**

1. An electrolyte comprising at least one lithium salt, at least one non-aqueous solvent and a ionic liquid comprising a compound of Formula 1: $M_2S_y/M_2(S_m)_y$ where M is an organic cation, m is an integer from 1 to 16 and y is the integer indicating the stoichiometry necessary to neutralize the positive charge of 2M; wherein the compound of Formula 1: $M_2S_y/M_2(S_m)_y$ contains a molar ratio of sulfide $M_2S_y$ and added elemental sulfur from 1:1.01 to 1:15.

2. The electrolyte of claim 1, wherein the compound of Formula 1: $M_2S_y/M_2(S_m)_y$ contains a molar ratio of sulfide $M_2S_y$ and added elemental sulfur from 1:2 to 1:10.

3. The electrolyte of claim 2, wherein the compound of Formula 1: $M_2S_y/M_2(S_m)_y$ contains a molar ratio of sulfide $M_2S_y$ and added elemental sulfur from 1:2 to 1:10, and the electrolyte is an electrolyte wherein the compound of Formula 1: $M_2S_y/M_2(S_m)_y$ represents from 0.1 to 10 wt% (weight) with respect to the total weight of the electrolyte.

4. The electrolyte of any one of claims 1-3, wherein M comprises at least one charged atom selected from the group consisting of $N^+$, $C^+$, $P^+$, $S^+$ and combinations thereof.

5. The electrolyte of any one of claims 1-4, wherein M is an organic cation with a formula selected from the group consisting of:

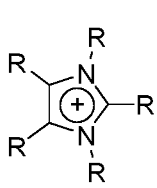 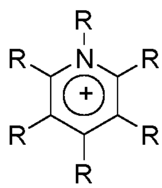 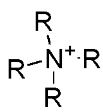 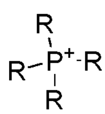 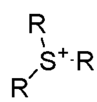

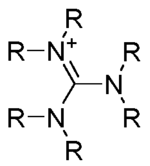 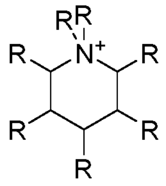 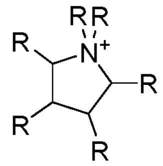 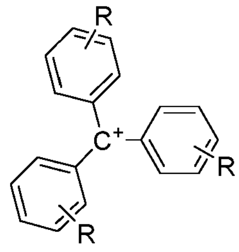

wherein the substituents R are the same or different and are selected from the group consisting of:

(i) $C_1$-$C_{30}$ alkyl, $C_1$-$C_{30}$ alkoxy, $C_1$-$C_{30}$ alkyl sulfide, $C_3$-$C_{12}$ cycloalkyl, $C_1$-$C_{12}$ heterocyclyl, $C_2$-$C_8$ alkenyl, $C_2$-$C_8$ alkynyl, $C_6$-$C_{12}$ aryl, $C_1$-$C_{12}$ heteroaryl,
alkylaryl, alkylheteroaryl, alkylcyclyl, alkylheterocyclyl, $Ph_2P(O)$-, $Ph_2P$-, $Me_2P(O)$-, $Me_2P$-, $Ph_2P(S)$-, $Me_2P(S)$-, $Ph_3P$=N-, $Me_3P$=N-, $FSO_2CF_2$-, $ClSO_2(CF_2)_n$-,
$HSO_3(CF_2)_n$-, $HCO_2(CF_2)_n$, $FSO_2NHSO_2(CF_2)_n$-, $CF_3SO_2NHSO_2(CF_2)_n$-, $C_nF_{2n+1}$ $SO_2NHSO_2(CF_2)_n$-, $FSO_2(CF_2)_n$-, $ClSO_2(CF_2)_n$-, $C_nF_{2n+1}$ $SO_2NH(CF_2)_n$-, -OH, -F, -Cl, -Br, -I, -CN, $-NO_2$, $-SO_3H$ and $C_1$-$C_6$ hydroxy alkyl,

Wherein n is an integer having a value from 1 to 48; or alternatively,
(ii) R is part of a polymer chain, linear, branched or cross-linked,
and wherein optionally two adjacent substituents R are linked to each other pairwise to form a polycyclic ring system.

**6.** The electrolyte of any one of claims 1-5, wherein the organic cation is selected from the group consisting of pyridinium, imidazolium, dialkylimidazolium, trialkylimidazolium, dialkylpyrrolidinium, mono or dialkylpyridinium, trialkylsulfonium, oxazolium, thiazolium, oxadiazolium, triazolium, piperidinium, pyrazolium, pyrimidinium, pyrazinium, triazinium, phosphonium, sulfonium, carbazolium, indolium, quaternary amines, quaternary phosphonium and combinations thereof.

**7.** The electrolyte of any one of claims 1-6, optionally comprising at least one additive, wherein the at least one additive is selected from the group consisting of $LiNO_3$, ethylene carbonate (EC), dimethyl carbonate, methylethyl carbonate (MEC), diethyl carbonate (DEC), ethyl propionate, methyl propionate, propylene carbonate (PC), gamma.-butyrolactone (y-BL), acetonitrile (AN), ethyl acetate (EA), propyl formate (PF), methyl formate (MF), toluene, xylene or methyl acetate (MA), fluoroethylene carbonate (FEC), vinylene carbonate (VC), dimethyl acetamide (DMAc), allyl ethyl carbonate (AEC), $P_2S_5$, fluorinated ethers and combinations thereof.

**8.** The electrolyte of any one of claims 1-7, wherein the at least one lithium salt is selected from the group consisting of bis-trifluoromethyl sulfonylimide lithium ($LiN(CF_3SO_2)_2$, commonly named as LiTFSI, lithium perchlorate ($LiClO_4$), lithium hexafluorophosphate ($LiPF_6$), lithium borofluoride ($LiBF_4$), lithium hexafluoroarsenide ($LiAsF_6$), lithium trifluoro-metasulfonate ($LiCF_3SO_3$), lithium bis(oxalato)borate (LiBOB), lithium oxalyldifluoroborate ($LiBF_2C_2O_4$), lithium nitrate ($LiNO_3$), Li-Fluoroalkyl-Phosphates ($LiPF_3(CF_2CF_3)_3$), lithium bisperfluoroethysulfonylimide (LiBETI) and combinations thereof.

**9.** The electrolyte of any one of claims 1-8, wherein the at least one non-aqueous solvent is selected from the group consisting of 1,3-dioxolane (DOL), 1,2-dimethoxyethane (DME), tetraethylene glycol dimethylether (TEGDME), Poly(ethylene glycol)dimethyl ether (PEGDME), diethylene glycol dibutyl ether (DEGDBE), 2-ethoxyethyl ether (EEE), sulfone, sulfolane, tetrahydrofuran (THF), 2-Methyltetrahydrofuran (2Me-THF), Diethoxyethane, ethylene carbonate (EC), dimethyl carbonate (DMC), ethyl methyl carbonate (MEC), diethyl carbonate (DEC), ethyl propionate, methyl propionate, propylene carbonate (PC), gamma.-butyrolactone (y-BL), acetonitrile (AN), adiponitrile (AN), Glutaronitrile, ethyl acetate (EA), propyl formate (PF), methyl formate (MF), toluene, xylene or methyl acetate (MA), fluoroethylene carbonate (FEC), vinylene carbonate (VC), dimethyl acetamide (DMAc), allyl ethyl carbonate (AEC), fluorinated ethers and combinations thereof.

**10.** A process for preparing the electrolyte of any one of claims 1-9 comprising the steps of:

a) Dissolving the ionic liquid in the at least one non-aqueous solvent;

b) Adding sulfur to the resulting solution of step a);
c) Adding the at least one lithium salt to the result of step b);
d) Optionally, adding at least one additive to the result of step c);
e) Stirring for an appropriate period of time to obtain the electrolyte.

**11.** The process for preparing the electrolyte of claim 10, wherein in step a) the non-aqueous solvent is a mixture of DME and DOL and in step c) the at least one lithium salt is LiTFSI and in step d) the at least one additive is $LiNO_3$.

**12.** A lithium-sulfur battery comprising the electrolyte according to any one of claims 1-9.

**13.** The lithium-sulfur battery of claim 12 wherein the cathode comprises sulfur and carbon.

**14.** The lithium-sulfur battery of claim 12 wherein the anode comprises lithium and a second element selected from the group consisting of graphite and silicon.

**15.** Use of the lithium-sulfur battery according to any one of claims 12-14 in electronic, consumer, stationary applications or transportation devices.

## Patentansprüche

**1.** Ein Elektrolyt umfassend mindestens ein Lithiumsalz, mindestens ein nichtwässriges Lösungsmittel und eine ionische Flüssigkeit umfassend eine Verbindung der Formel 1: $M_2S_y/M_2(S_m)_y$, wobei M ein organisches Kation ist, m eine Ganzzahl von 1 bis 16 ist und y die Ganzzahl ist, die die Stöchiometrie angibt, die erforderlich ist, um die positive Ladung von 2M zu neutralisieren; wobei die Verbindung der Formel 1: $M_2S_y/M_2(S_m)_y$ ein Molverhältnis von Sulfid $M_2S_y$ und zugesetztem elementarem Schwefel von 1:1,01 bis 1:15 enthält.

**2.** Der Elektrolyt des Anspruchs 1, wobei die Verbindung der Formel 1: $M_2S_y/M_2(S_m)_y$ ein Molverhältnis von Sulfid $M_2S_y$ und zugesetztem elementarem Schwefel von 1:2 bis 1:10 enthält.

**3.** Der Elektrolyt des Anspruchs 2, wobei die Verbindung der Formel 1 : $M_2S_y/M_2(S_m)_y$ ein Molverhältnis von Sulfid $M_2S_y$ und zugesetztem elementarem Schwefel von 1:2 bis 1:10 enthält und der Elektrolyt ein Elektrolyt ist, wobei die Verbindung von Formel 1: $M_2S_y/M_2(S_m)_y$ von 0,1 bis 10 Gew.-% (Gewicht) bezogen auf das gesamte Gewicht des Elektrolyten ausmacht.

**4.** Der Elektrolyt von einem der Ansprüche 1 bis 3, wobei M mindestens ein geladenes Atom umfasst, das ausgewählt aus der Gruppe bestehend aus $N^+$, $C^+$, $P^+$, $S^+$ und Kombinationen davon ist.

**5.** Der Elektrolyt von einem der Ansprüche 1 bis 4, wobei M ein organisches Kation mit einer Formel ist, die ausgewählt ist aus der Gruppe bestehend aus:

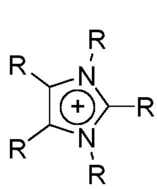
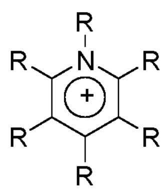
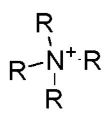
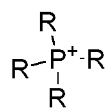
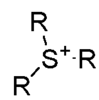

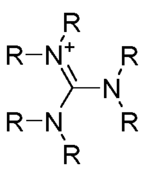
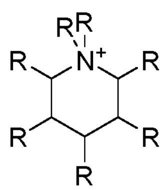
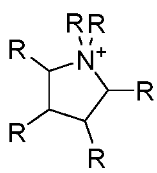
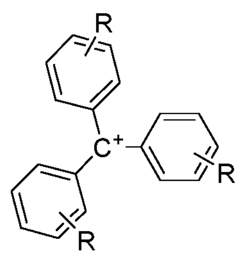

wobei die Substituenten R die gleichen oder verscheiden sind und ausgewählt sind aus der Gruppe bestehend aus:

(i) ($C_1$-$C_{30}$)-Alkyl, ($C_1$-$C_{30}$)-Alkoxy, ($C_1$-$C_{30}$)-Alkylsulfid, ($C_3$-$C_{12}$)-Cycloalkyl, ($C_1$-$C_{12}$)-Heterocyclyl, ($C_2$-$C_8$)-Alkenyl, ($C_2$-$C_8$)-Alkynyl, ($C_6$-$C_{12}$)-Aryl, ($C_1$-$C_{12}$)-Heteroaryl, Alkylaryl, Alkylheteroaryl, Alkylcyclyl, Alkylheterocyclyl,
$Ph_2P(O)$-, $Ph_2P$-, $Me_2P(O)$-, $Me_2P$-, $Ph_2P(S)$-, $Me_2P(S)$-, $Ph_3P{=}N$-, $Me_3P{=}N$-, $FSO_2CF_2$-, $ClSO_2(CF_2)_n$-, HSO3$(CF_2)_n$-, $HCO_2(CF_2)_n$, $FSO_2NHSO_2(CF_2)_n$-, $CF_3SO_2NHSO_2(CF_2)_n$-, $C_nF_{2n+1}$ $SO_2NHSO_2(CF_2)_n$-, $FSO_2(CF_2)_n$-, $ClSO_2(CF_2)_n$- , $C_nF_{2n+1}$ $SO_2NH(CF_2)_n$-, -OH, -F, -Cl, -Br, -I, -CN, $-NO_2$, $-SO_3H$ und ($C_1$-$C_6$)-Hydroxyalkyl,

wobei n eine Ganzzahl ist, die einen Wert von 1 bis 48 hat; oder, ersatzweise,
(ii) R Teil von einer Polymerkette, linear, verzweigt oder vernetzt ist,
und wobei wahlweise zwei aneinandergrenzende Substituenten R paarweise miteinander verbunden sind und dabei ein polycyclisches Ringsystem bilden.

6. Der Elektrolyt von einem der Ansprüche 1 bis 5, wobei das organische Kation ausgewählt ist aus der Gruppe bestehend aus Pyridinium, Imidazolium, Dialkylimidazolium, Trialkylimidazolium, Dialkylpyrrolidinium, Mono- oder Dialkylpyridinium, Trialkylsulfonium, Oxazolium, Thiazolium, Oxadiazolium, Triazolium, Piperidinium, Pyrazolium, Pyrimidinium, Pyrazinium, Triazinium, Phosphonium, Sulfonium, Carbazolium, Indolium, quaternären Aminen, quaternärem Phosphonium und Kombinationen davon.

7. Der Elektrolyt von einem der Ansprüche 1 bis 6, wahlweise umfassend mindestens einen Zusatzstoff, wobei der mindestens eine Zusatzstoff ausgewählt ist aus der Gruppe bestehend aus $LiNO_3$, Ethylencarbonat (EC), Dimethylcarbonat, Methylethylcarbonat (MEC), Diethylcarbonat (DEC), Ethylpropionat, Methylpropionat, Propylencarbonat (PC), Gamma-Butyrolacton (y-BL), Acetonitril (AN), Ethylacetat (EA), Propylformiat (PF), Methylformiat (MF), Toluol, Xylol oder Methylacetat (MA), Fluorethylencarbonat (FEC), Vinylencarbonat (VC), Dimethylacetamid (DMAc), Allylethylcarbonat (AEC), $P_2S_5$, fluorierten Ethern und Kombinationen davon.

8. Der Elektrolyt von einem der Ansprüche 1 bis 7, wobei das mindestens eine Lithiumsalz ausgewählt ist aus der Gruppe bestehend aus Bis-Trifluormethylsulfonylimid-Lithium ($LiN(CF_3SO_2)_2$, üblicherweise als LiTFSI bezeichnet, Lithiumperchlorat ($LiClO_4$), Lithiumhexafluorophosphat ($LiPF_6$), Lithiumborofluorid ($LiBF_4$), Lithiumhexafluorarsenid ($LiAsF_6$), Lithiumtrifluormetasulfonat ($LiCF_3SO_3$), Lithiumbis(oxalato)borat (LiBOB), Lithiumoxalyldifluorborat ($LiBF_2C_2O_4$), Lithiumnitrat ($LiNO_3$), Li-Fluoralkylphosphaten ($LiPF_3(CF_2CF_3)_3$), Lithiumbisperfluorethylsulfonylimid (LiBETI) und Kombinationen davon.

9. Der Elektrolyt von einem der Ansprüche 1 bis 8, wobei das mindestens eine nichtwässrige Lösungsmittel ausgewählt ist aus der Gruppe bestehend aus 1,3-Dioxolan (DOL), 1,2-Dimethoxyethan (DME), Tetraethylenglykoldimethylether (TEGDME), Poly(ethylenglykol)dimethylether (PEGDME), Diethylenglykoldibutylether (DEGDBE), 2-Ethoxyethylether (EEE), Sulfon, Sulfolan, Tetrahydrofuran (THF), 2-Methyltetrahydrofuran (2Me-THF), Diethoxyethan, Ethylencarbonat (EC), Dimethylcarbonat (DMC), Ethylmethylcarbonat (MEC), Diethylcarbonat (DEC), Ethylpropionat, Methylpropionat, Propylencarbonat (PC), Gamma-Butyrolacton (y-BL), Acetonitril (AN), Adiponitril (AN), Glutaronitril, Ethylacetat (EA), Propylformiat (PF), Methylformiat (MF), Toluol, Xylol oder Methylacetat (MA), Fluorethylencarbonat (FEC), Vinylencarbonat (VC), Dimethylacetamid (DMAc), Allylethylcarbonat (AEC), fluorierten Ethern und Kombinationen davon.

10. Ein Verfahren zur Herstellung des Elektrolyten von einem der Ansprüche 1 bis 9, umfassend die folgenden Schritte:

a) Auflösen der ionischen Flüssigkeit in das mindestens eine nichtwässrige Lösungsmittel;
b) Hinzufügen von Schwefel zu der resultierenden Lösung von Schritt a);
c) Hinzufügen des mindestens einen Lithiumsalzes zum Ergebnis von Schritt b);
d) Wahlweise, hinzufügen von mindestens einem Zusatzstoff zum Ergebnis von Schritt c);
e) Rühren für einen angemessenen Zeitraum, um den Elektrolyten zu erhalten.

11. Das Verfahren zur Herstellung des Elektrolyten des Anspruchs 10, wobei in Schritt a) das nichtwässrige Lösungsmittel eine Mischung aus DME und DOL ist und in Schritt c) das mindestens eine Lithiumsalz LiTFSI ist und in Schritt d) der mindestens eine Zusatzstoff $LiNO_3$ ist.

12. Eine auf Lithium-Schwefel basierende Batterie umfassend den Elektrolyten nach einem der Ansprüche 1 bis 9.

**13.** Die auf Lithium-Schwefel basierende Batterie des Anspruchs 12, wobei die Kathode Schwefel und Kohlenstoff enthält.

**14.** Die auf Lithium-Schwefel basierende Batterie des Anspruchs 12, wobei die Anode Lithium und ein zweites Element enthält, das ausgewählt aus der Gruppe bestehend aus Graphit und Silizium ist.

**15.** Verwendung der auf Lithium-Schwefel basierenden Batterie nach einem der Ansprüche 12 bis 14 in elektronischen Anwendungen, Verbraucheranwendungen, stationären Anwendungen oder Transportgeräten.

## Revendications

**1.** Un électrolyte comprenant au moins un sel de lithium, au moins un solvant non aqueux et un liquide ionique comprenant un composé de formule 1 : $M_2S_y/M_2(S_m)_y$ où M est un cation organique, m est un nombre entier de 1 à 16 et y est le nombre entier indiquant la stœchiométrie nécessaire pour neutraliser la charge positive de 2M ; dans lequel le composé de formule 1 : $M_2S_y/M_2(S_m)_y$ contient un rapport molaire de sulfure $M_2S_y$ et de soufre élémentaire ajouté allant de 1:1,01 à 1:15.

**2.** L'électrolyte de la revendication 1, dans lequel le composé de formule 1 : $M_2S_y/M_2(S_m)_y$ contient un rapport molaire de sulfure $M_2S_y$ et de soufre élémentaire ajouté allant de 1:2 à 1:10.

**3.** L'électrolyte de la revendication 2, dans lequel le composé de formule 1 : $M_2S_y/M_2(S_m)_y$ contient un rapport molaire de sulfure $M_2S_y$ et de soufre élémentaire ajouté allant de 1:2 à 1:10, et l'électrolyte est un électrolyte dans lequel le composé de Formule 1 : $M_2S_y/M_2(S_m)_y$ représente de 0,1 à 10% en poids par rapport au poids total de l'électrolyte.

**4.** L'électrolyte de l'une quelconque des revendications 1 à 3, dans lequel M comprend au moins un atome chargé choisi dans le groupe constitué de $N^+$, $C^+$, $P^+$, $S^+$ et des combinaisons de ceux-ci.

**5.** L'électrolyte de l'une quelconque des revendications 1 à 4, dans lequel M est un cation organique ayant une formule choisie dans le groupe constitué de:

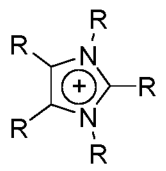
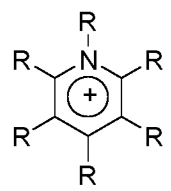
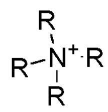
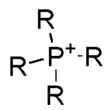
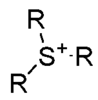

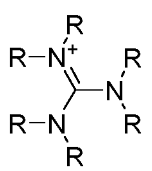
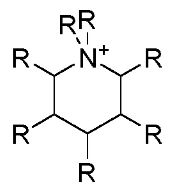
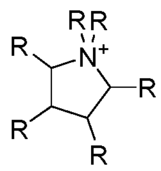
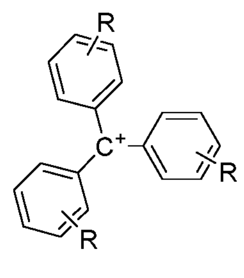

où les substituants R sont identiques ou différents et ils sont choisis dans le groupe constitué de :

(i) alkyle en ($C_1$-$C_{30}$), alcoxy en ($C_1$-$C_{30}$), sulfure d'alkyle en ($C_1$-$C_{30}$), cycloalkyle en ($C_3$-$C_{12}$), hétérocyclyle en ($C_1$-$C_{12}$), alcényle en ($C_2$-$C_8$), alcynyle en ($C_2$-$C_8$), aryle en ($C_6$-$C_{12}$), hétéroaryle en ($C_1$-$C_{12}$), alkylaryle, alkylhétéroaryle, alkylcyclyle, alkylhétérocyclyle,
$Ph_2P(O)$-, $Ph_2P$-, $Me_2P(O)$-, $Me_2P$-, $Ph_2P(S)$-, $Me_2P(S)$-, $Ph_3P=N$-, $Me_3P=N$-, $FSO_2CF_2$-, $ClSO_2(CF_2)_n$-, $HSO_3(CF_2)_n$-, $HCO_2(CF_2)_n$, $FSO_2NHSO_2(CF_2)_n$-, $CF_3SO_2NHSO_2(CF_2)_n$-, $C_nF_{2n+1}$ $SO_2NHSO_2(CF_2)_n$-, $FSO_2(CF_2)_n$-, $ClSO_2(CF_2)_n$, $C_nF_{2n+1}$ $SO_2NH(CF_2)_n$-, -OH, -F, -Cl, -Br, -I, -CN, $-NO_2$, $-SO_3H$ et hydroxyalkyle en ($C_1$-$C_6$),

où n est un nombre entier ayant une valeur allant de 1 à 48 ; ou, alternativement,
(ii) R fait partie d'une chaîne polymère, linéaire, ramifiée ou réticulée,
et, où, facultativement, deux substituants R adjacents sont liés l'un à l'autre en paires en formant un système annulaire polycyclique.

**6.** L'électrolyte de l'une quelconque des revendications 1 à 5, dans lequel le cation organique est choisi dans le groupe constitué par le pyridinium, l'imidazolium, le dialkylimidazolium, le trialkylimidazolium, le dialkylpyrrolidinium, le mono ou le dialkylpyridinium, le trialkylsulfonium, l'oxazolium, le thiazolium, l'oxadiazolium, le triazolium, le pipéridinium, le pyrazolium, le pyrimidinium, le pyrazinium,
le triazinium, le phosphonium, le sulfonium, le carbazolium, l'indolium, des amines quaternaires, du phosphonium quaternaire et des combinaisons de ceux-ci.

**7.** L'électrolyte de l'une quelconque des revendications 1 à 6, comprenant facultativement au moins un additif, dans lequel l'au moins un additif est choisi dans le groupe constitué par le $LiNO_3$, le carbonate d'éthylène (EC), le carbonate de diméthyle, le carbonate de méthyléthyle (MEC), le carbonate de diéthyle (DEC), le propionate d'éthyle, le propionate de méthyle, le carbonate de propylène (PC), la gamma-butyrolactone (y-BL), l'acétonitrile (AN), l'acétate d'éthyle (EA), le formiate de propyle (PF), le formiate de méthyle (MF), le toluène, le xylène ou l'acétate de méthyle (MA), le carbonate de fluoroéthylène (FEC), le carbonate de vinylène (VC), la diméthylacétamide (DMAc), le carbonate d'allyle éthyle (AEC), le $P_2S_5$, des éthers fluorés et des combinaisons de ceux-ci.

**8.** L'électrolyte selon l'une quelconque des revendications 1 à 7, dans lequel l'au moins un sel de lithium est choisi dans le groupe constitué par la bis-trifluorométhyl sulfonylimide de lithium ($LiN(CF_3SO_2)_2$, communément appelé LiTFSI, le perchlorate de lithium ($LiClO_4$), l'hexafluorophosphate de lithium ($LiPF_6$), le borofluorure de lithium ($LiBF_4$), l'hexafluoroarséniure de lithium ($LiAsF_6$), le trifluoro-métasulfonate de lithium ($LiCF_3SO_3$), le bis(oxalato)borate de lithium (LiBOB), l'oxalyldifluoroborate de lithium ($LiBF_2C_2O_4$), le nitrate de lithium ($LiNO_3$), des fluoroalkyl-phosphates de Li ($LiPF_3(CF_2CF_3)_3$), le bisperfluoroéthysulfonylimide de lithium (LiBETI) et des combinaisons de ceux-ci.

**9.** L'électrolyte de l'une quelconque des revendications 1 à 8, dans lequel l'au moins un solvant non aqueux est choisi dans le groupe constitué par le 1,3-dioxolane (DOL), le 1,2-diméthoxyéthane (DME), le tétraéthylène glycol diméthyléther (TEGDME), le poly(éthylèneglycol) diméthyl éther (PEGDME), le diéthylène glycol dibutyl éther (DEGDBE), le 2-éthoxyéthyl éther (EEE), la sulfone, le sulfolane, le tétrahydrofurane (THF), le 2-méthyltétrahydrofurane (2Me-THF), le diéthoxyéthane, l'éthylène carbonate (EC), le carbonate de diméthyle (DMC), le carbonate d'éthyle méthyle (MEC), le carbonate de diéthyle (DEC), le propionate d'éthyle, le propionate de méthyle, le carbonate de propylène (PC), la gamma-butyrolactone (y-BL), l'acétonitrile (AN), l'adiponitrile (AN), le glutaronitrile, l'acétate d'éthyle (EA), le formiate de propyle (PF), le formiate de méthyle (MF), le toluène, le xylène ou l'acétate de méthyle (MA), le carbonate de fluoroéthylène (FEC), le carbonate de vinylène (VC), la diméthylacétamide (DMAc), le carbonate d'allyléthyle (AEC), des éthers fluorés et des combinaisons de ceux-ci.

**10.** Un procédé de préparation de l'électrolyte de l'une quelconque des revendications 1 à 9 comprenant les étapes de :

a) dissoudre le liquide ionique dans l'au moins un solvant non aqueux ;
b) ajouter du soufre à la solution résultante de l'étape a) ;
c) ajouter l'au moins un sel de lithium au résultat de l'étape b) ;
d) facultativement, ajouter au moins un additif au résultat de l'étape c) ;
e) agiter pendant une période de temps appropriée pour obtenir l'électrolyte.

**11.** Le procédé de préparation de l'électrolyte de la revendication 10, dans lequel dans l'étape a) le solvant non aqueux est un mélange de DME et de DOL et dans l'étape c) l'au moins un sel de lithium est le LiTFSI et dans l'étape d) l'au moins un additif est le $LiNO_3$.

**12.** Une batterie au lithium-soufre comprenant l'électrolyte selon l'une quelconque des revendications 1 à 9.

**13.** La batterie au lithium-soufre de la revendication 12, dans laquelle la cathode comprend du soufre et du carbone.

**14.** La batterie au lithium-soufre de la revendication 12, dans laquelle l'anode comprend du lithium et un second élément choisi dans le groupe constitué par le graphite et le silicium.

**15.** Utilisation de la batterie au lithium-soufre selon l'une quelconque des revendications 12 à 14 dans des applications

électroniques, grand public, stationnaires ou des dispositifs de transport.

FIG.1.

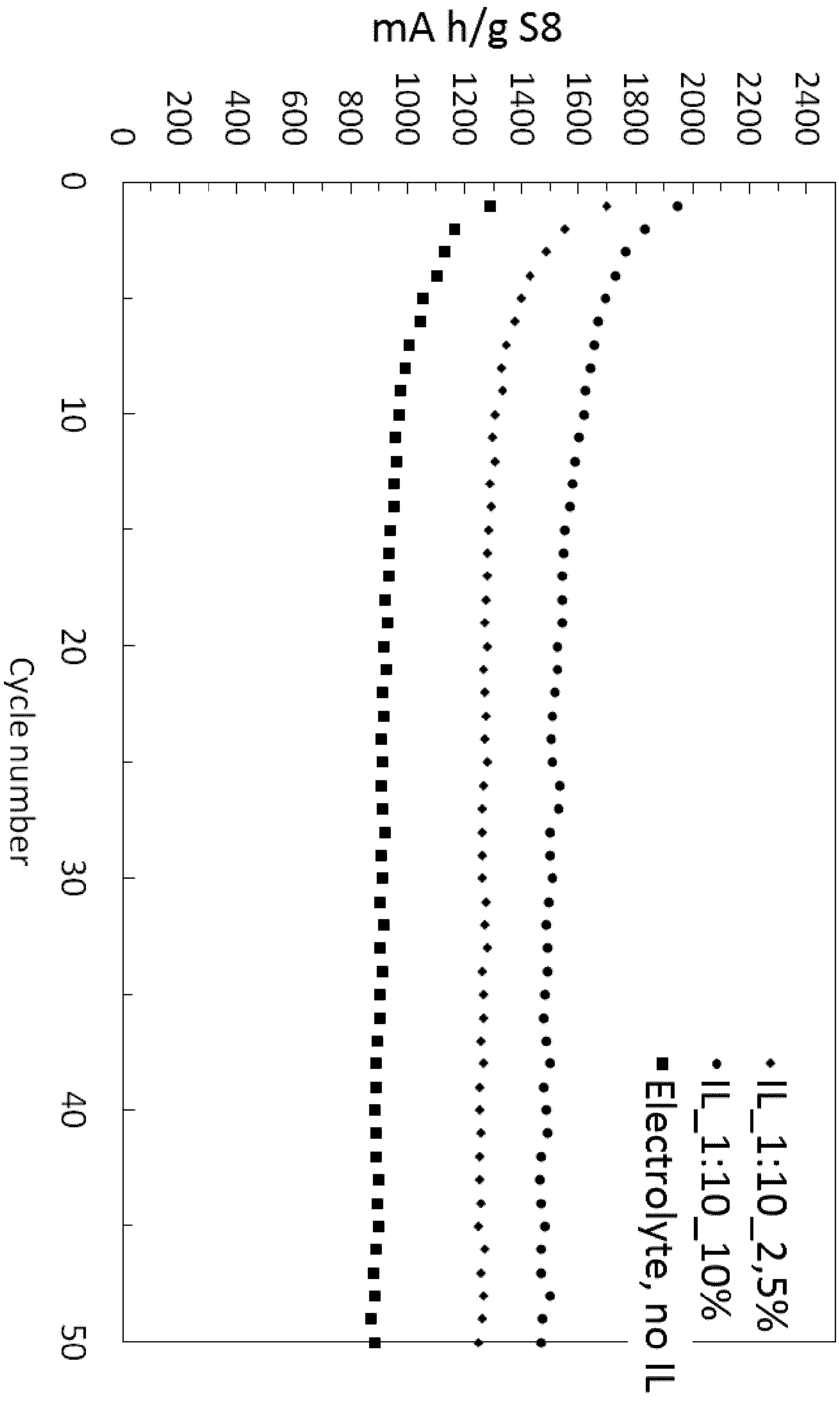
mA h/g S8
0
200
400
600
800
1000
1200
1400
1600
1800
2000
2200
2400
0
10
20
30
40
50
Cycle number
IL_1:10_2,5%
IL_1:10_10%
Electrolyte, no IL

FIG.2.

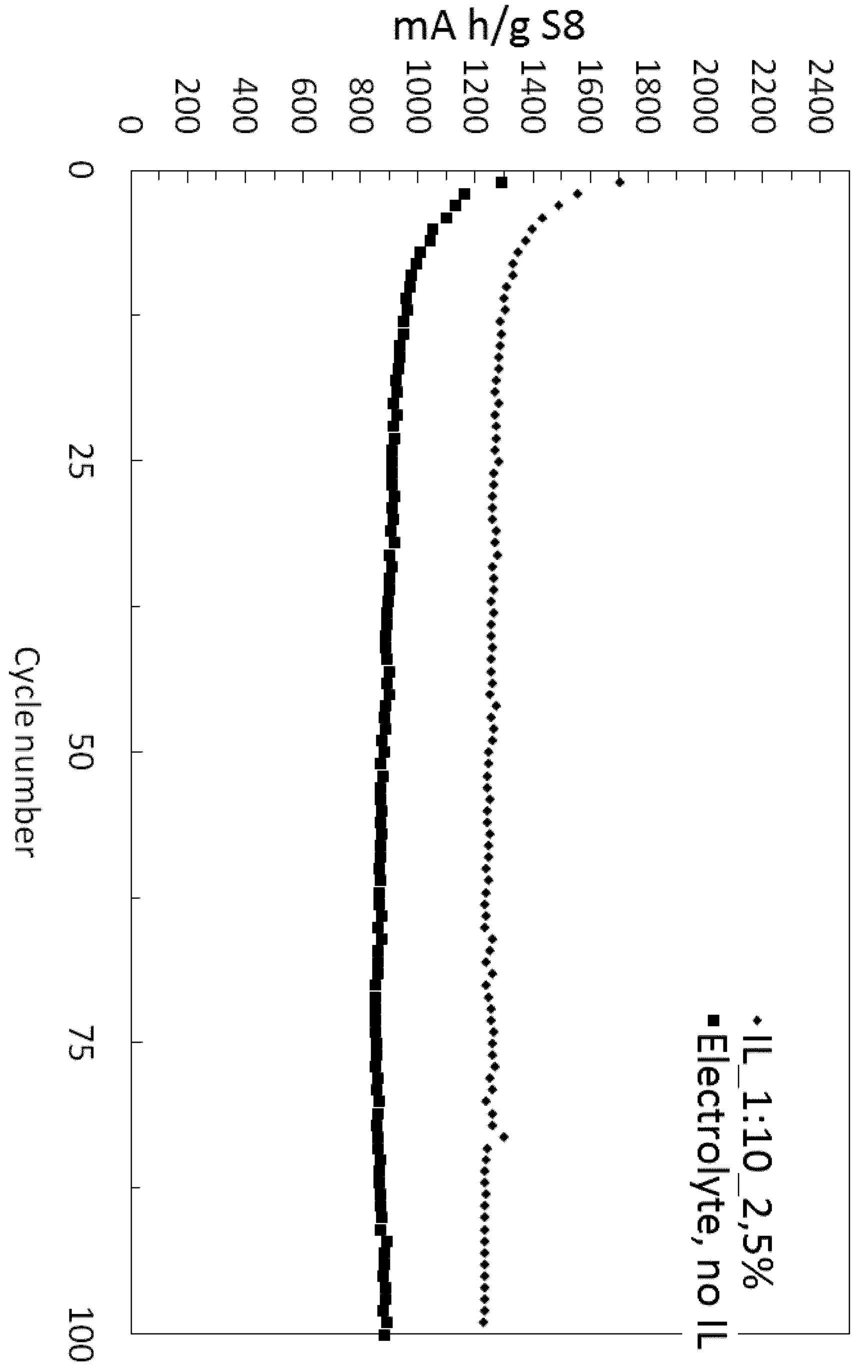
mA h/g S8
0
200
400
600
800
1000
1200
1400
1600
1800
2000
2200
2400
Cycle number
0
25
50
75
100
IL_1:10_2,5%
Electrolyte, no IL

FIG.3.

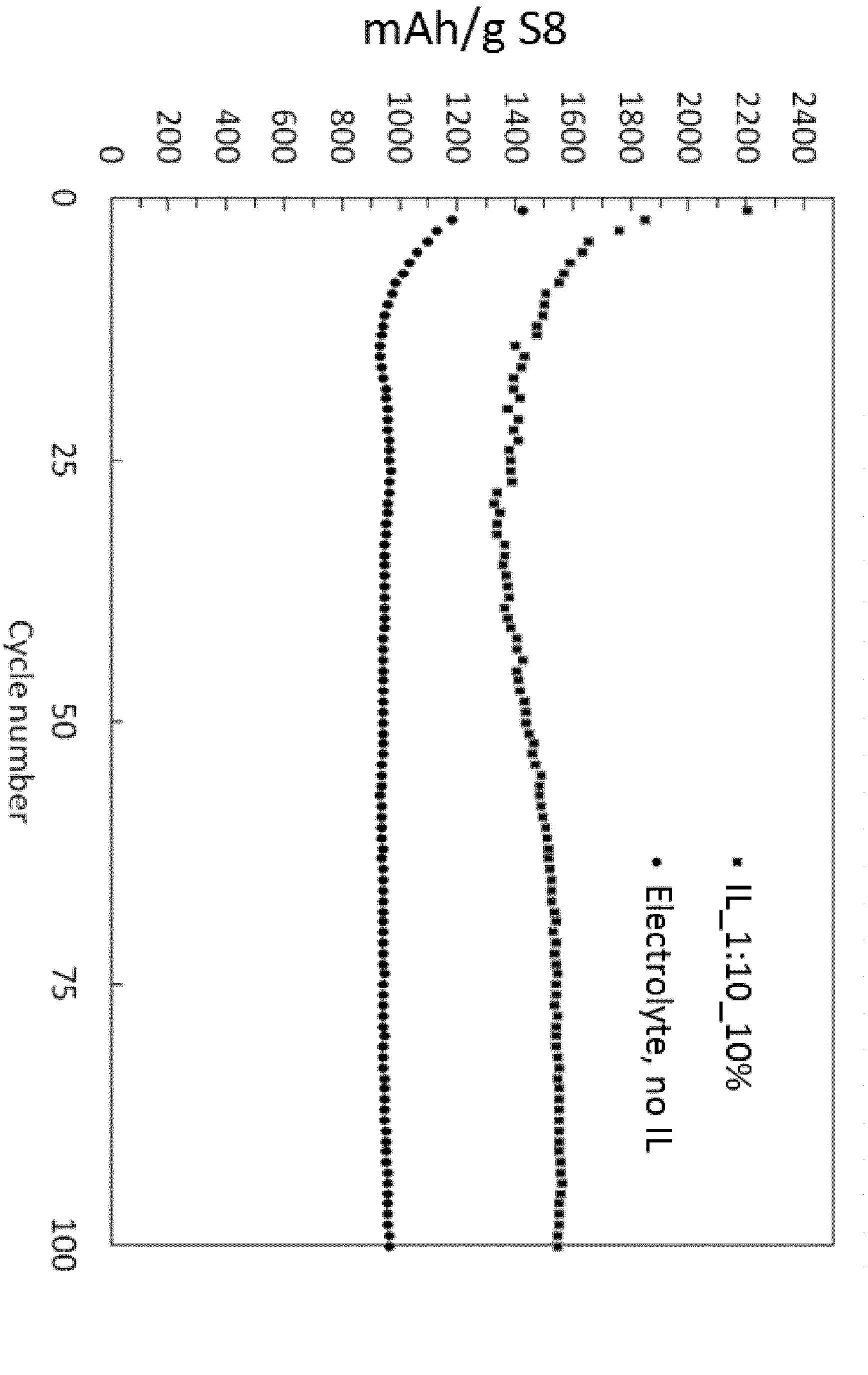
mAh/g S8
0
200
400
600
800
1000
1200
1400
1600
1800
2000
2200
2400
Cycle number
0
25
50
75
100
IL_1:10_10%
Electrolyte, no IL

FIG.4.

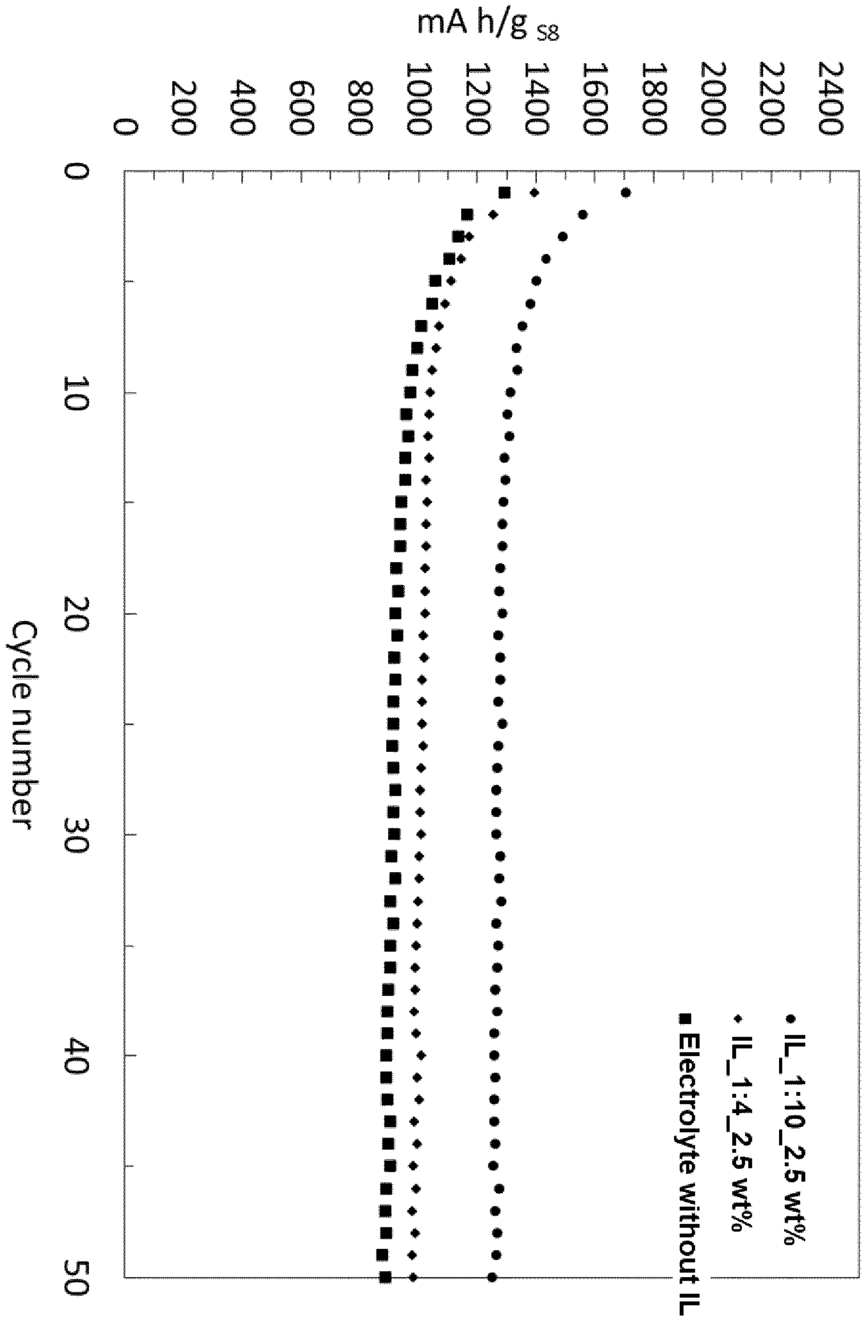
mA h/g S8
0
200
400
600
800
1000
1200
1400
1600
1800
2000
2200
2400
0
10
20
30
40
50
Cycle number
IL_1:10_2.5 wt%
IL_1:4_2.5 wt%
Electrolyte without IL

FIG.5

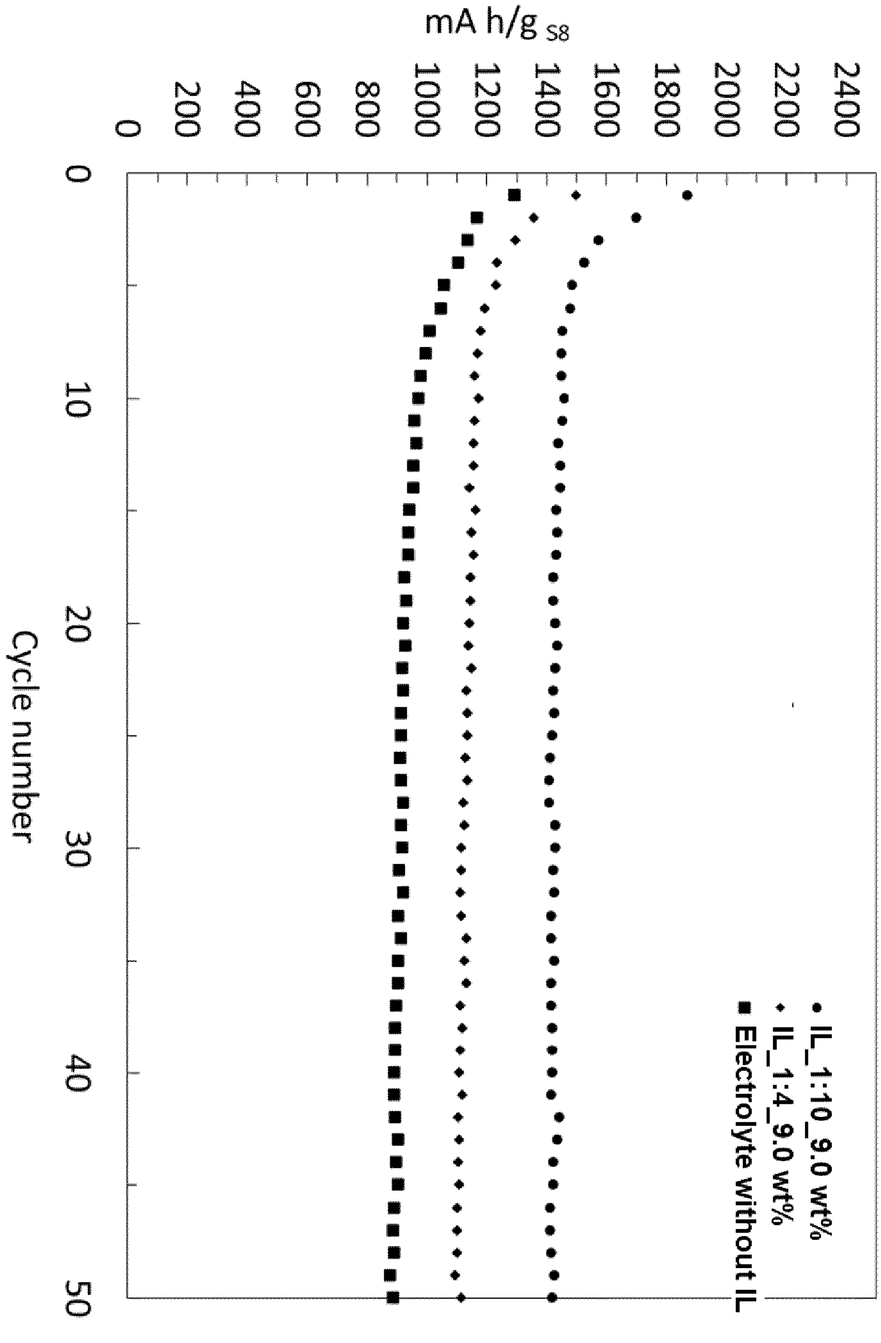
mA h/g S8
0
200
400
600
800
1000
1200
1400
1600
1800
2000
2200
2400
0
10
20
30
40
50
Cycle number
IL_1:10_9.0 wt%
IL_1:4_9.0 wt%
Electrolyte without IL

FIG.6

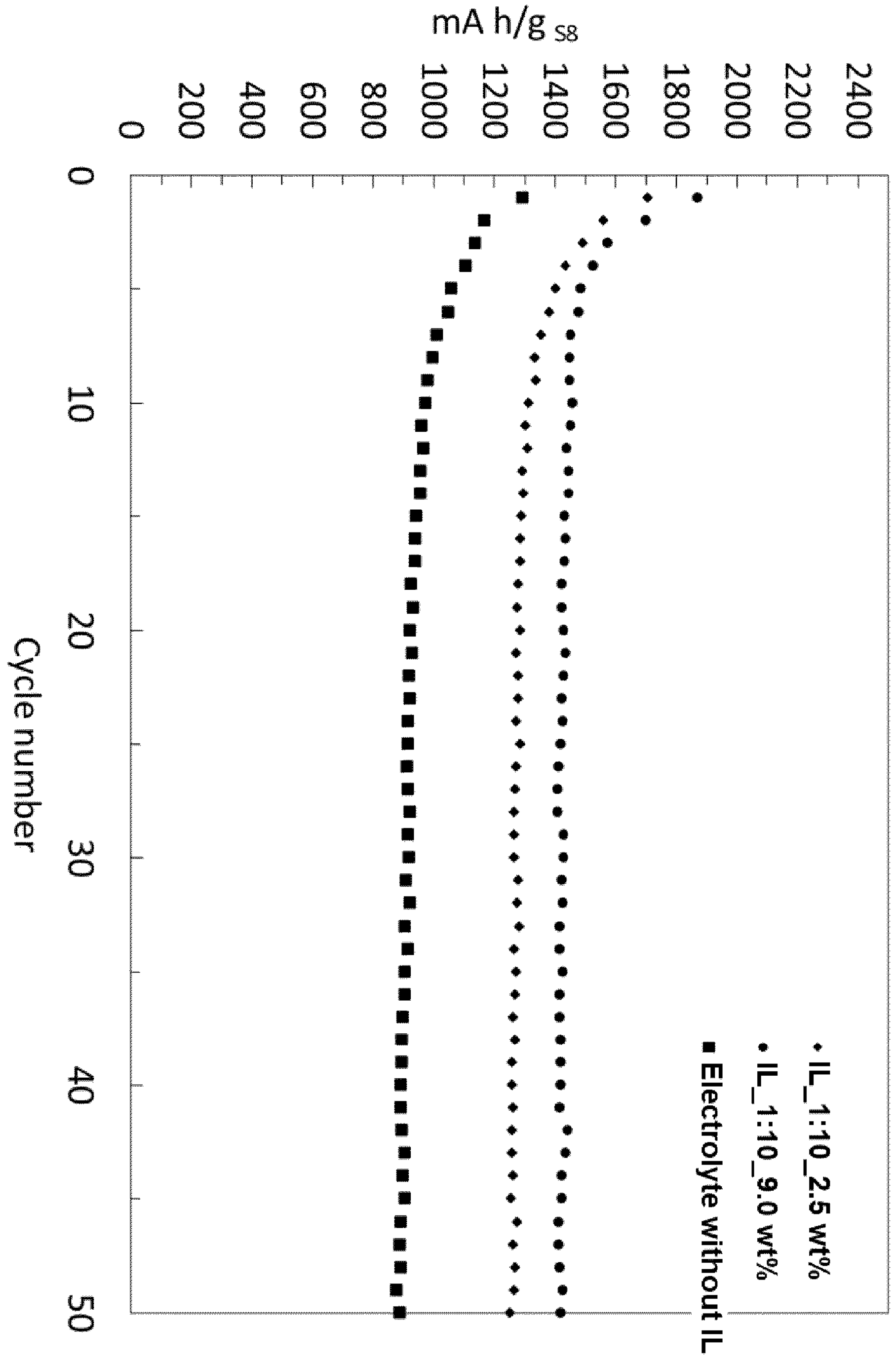
mA h/g S8
0
200
400
600
800
1000
1200
1400
1600
1800
2000
2200
2400
0
10
20
30
40
50
Cycle number
IL_1:10_2.5 wt%
IL_1:10_9.0 wt%
Electrolyte without IL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 16382315
- US 2014170459 A1
- EP 2572402 B1
- WO 2015193293 A


### Non-patent literature cited in the description


- **CHANG et al.** Binary electrolyte based on tetra(ethylene glycol) dimethyl ether and 1,3-dioxolane for lithium-sulfur battery. *J. Power Sources,* 2002, vol. 112, 452-460
- **YANG Y. et al.** Effect of cations in ionic liquids on the electrochemical performance of lithium-sulfur batteries. *Science China (Chemistry),* 2014, vol. 57, 1564-1569
- **PARK J-W et al.** Ionic liquid electrolytes for lithium-sulfur batteries. *J. Phys. Chem. C.,* 2013, vol. 117, 20531-20541